# EUROPEAN PATENT SPECIFICATION

(11) **EP 3 011 876 B1**
(45) Date of publication and mention of the grant of the patent: **24.10.2018**
(21) Application number: 14812913.3
(22) Date of filing: 30.04.2014
(51) Int. Cl.: A47J 31/44, A47J 31/40, A47J 31/36

(54) **PART DRIVING STRUCTURE OF COFFEE MACHINE**
BAUTEILANTRIEBSSTRUKTUR EINER KAFFEEMASCHINE
STRUCTURE D'ENTRAÎNEMENT DE PIÈCES DE MACHINE À CAFÉ

(30) Priority: 18.06.2013 CN 201310240322
(43) Date of publication of application: 27.04.2016
(73) Proprietor: Ningbo Seaver Electric Appliance Co., Ltd, Yuyao, Zhejiang 315400 (CN)
(72) Inventor: WANG, Tianping, Yuyao Zhejiang 315400 (CN)
(74) Representative: Knoop, Philipp
(86) International application number: PCT/CN2014/000453
(87) International publication number: WO 2014/201846

(56) References cited:
- CN-A- 101 036 562
- CN-A- 101 036 562
- CN-A- 101 073 470
- CN-A- 101 073 470
- CN-A- 101 411 587
- CN-A- 101 411 587
- CN-A- 103 271 652
- CN-U- 202 858 855
- US-A1- 2007 017 374

## Description

### TECHNICAL FIELD

The present invention relates to a coffee machine working with coffee capsule, more particularly, to a part driving structure of a coffee machine for driving parts of the coffee machine to move.

### PRIOR ART

A coffee machine is a machine for preparing of coffee beverage, and conventional components of the coffee machine include a water tank, a heating element and a water pump, etc.; in use a capsule containing coffee powder is brought into the coffee machine, and then in use two parts inside the coffee machine are driven by a driving structure to be closed together so as to form a extraction chamber, at this time the coffee capsule lies in the extraction chamber, and then during the extraction, heated water is pumped by the water pump into the extraction chamber, the water flows through the coffee raw material to be extracted, and then the coffee beverage flows out of a water outlet pipe of the coffee machine into a cup.

In the prior beverage preparation devices, such as coffee machine, the driving structures for moving two parts to close and open the both parts are mostly based on driving structure of handle-linkage type. For example, the Chinese patent for invention No. ZL00812101.X (issue No.: CN1263415Y) with the title "A Device to Extract Material for Preparing Beverage" discloses a part driving structure of handle-linkage type, comprising a closing rod with two arms and two pulling rods, wherein the both arms of the closing rod are fixed to first pivot journals located on both sides of said second part and can rotate about them, and the pulling rods are fixed to second pivot journals located on both sides of said first part and can rotate about them. The ends of the pulling rods and the both arms of the closing rod are securely held together by a third rotatable pivot journal, in order to cooperate with each other so as to close and open the device.

For example, the Chinese patent for utility model No. ZL200720108105.4 (issue No.: CN201019552Y) with the title "A Device to Extract Material for Preparing Beverage" also discloses a part driving structure of handle-linkage type, comprising a handle with two arms, a transmission rod, a linkage, a rotary shaft and a transmission shaft, wherein one end of the transmission rod and the both arms of the handle are securely held together by means of the rotary shaft, and the rotary shaft is supported in a base so as to be rotatable relative to the base; one end of the linkage is pivotally connected to a first guide shaft, and the other end of the linkage and the other end of the transmission rod are pivotally connected together by means of the transmission shaft, in order that the handle, the transmission rod and the linkage rod cooperate with each other so as to close or open the first part and the second part.
CN000101411587A discloses an automatic bag falling mechanism for a coffee machine, which comprises a stand, a first machine member and a second machine member, wherein the first machine member and the second machine member are hermetically closed to form a sealing cavity, and a driving system is also arranged in the stand. The prior art automatic bag falling mechanism is characterized in that a push rod movably passes through the rear wall of the second machine member; correspondingly, the rear part in the stand is provided with a barrier piece matched with the push rod, and the barrier piece can move up and down relative to the stand; under the state that the second machine member moves backward relative to the first machine member, the barrier piece blocks the push rod to push the push rod to move toward the direction of ejecting coffee bags relative to the second machine member.

The prior art structure ejects the coffee bags through the forward movement of the push rod relative to the second machine member, and the barrier piece moves upward relative to the stand during the reset to prevent from being matched with the push rod, thus the coffee bags can be reloaded into a groove cavity of the second machine member for next extraction.

When in use of all the prior part driving structures of handle-linkage type, it is necessary to lift up or to depress the handle; prior to placing coffee capsule, the handle is lifted up to an angle, with the handle being warped upwards and occupying a larger height, so only when the coffee machine of this type is placed in a place with a certain spatial height, it can be used, the requirements for placement space of the coffee machine are high and it is user-unfriendly. In addition, in the prior part driving structures of handle-linkage type, locking of the both parts are achieved by the linkage structure, thus, in order to prevent water leakage during the extraction process, there are higher requirements for locking force of the both parts in the coffee machines, such that after the both parts are closed together, due to the very large locking force between the both parts, a larger force is required to actuate the handle and thus the operation is effort-intensive, if man wants to open the both parts again.

### SUMMARY OF THE INVENTION

The technical problem to be solved by the present invention is to provide a part driving structure of a coffee machine with respect to the above-mentioned prior art, in which part driving structure the parts can be actuated to slide only by means of horizontal moving of a pushing board, wherein during operation of this driving structure the pushing board is free of being warped upwards, without additional occupying of spatial height, and it is convenient and effort-saving in operation.

The present invention solves the above-mentioned technical problem by means of the following technical solution: a part driving structure of a coffee machine, comprising a base, a first part provided with a water outlet channel and a second part provided with a water inlet channel;
wherein the first part is fixed to the front end of the base, the second part is restrained within the base and can slide back and forth, and there is a capsule inlet provided in the upper portion of the base;
characterized in that a pushing board that can slide back and forth relative to the base is provided on the top surface of the base, a vertically disposed driving rod is pivotally connected to the bottom surface of the pushing board, a first transmission rod is pivotally connected to the rear end of the second part, and a second transmission rod is pivotally connected to the rear portion of the base, wherein the lower end of the driving rod, the rear end of the first transmission rod and the front end of the second transmission rod are movably sheathed on one and the same transmission shaft.

In order to make the pushing board slide more smoothly and to save force during pushing, a carriage for guide wheels is fixed to the lower end of the above-mentioned pushing board, the guide wheels are mounted on the carriage for guide wheels, and there is a guide shaft provided in the inner upper portion of the base respectively on the left and the right side, wherein wheel grooves on the guide wheels are in contact with the guide shafts, and the upper end of the driving rod is pivotally connected to the carriage for guide wheels by means of its own pivot journal. By contact limit realized by the guide wheels on the carriage for guide wheels and the guide shafts, the pushing board can be prevented from shaking during sliding, and at the same time because the guide wheels and the guide shafts are in rolling contact during sliding of the pushing board, the pushing board slides more easily.

The above-mentioned carriage for guide wheels is fixed underneath the pushing board by means of screws, and there are two mounting places for guide wheels provided respectively on the left and the right side of the carriage for guide wheels, wherein each of the guide wheels is mounted in one mounting place for guide wheel respectively, and the wheel grooves on the guide wheels on either side are in contact with the guide shaft on the corresponding side. By the contact limit realized by more than one guide wheel and guide shaft, the pushing board is more effectively prevented from shaking during sliding, and at the same time the pushing board slides more easily. The number of guide wheels may be set according to need.

A first front magnet is inserted in the front end of the above-mentioned carriage for guide wheels, and a second front magnet that corresponds to the first front magnet is inserted in the front portion of the base; a first rear magnet is inserted in the rear end of said carriage for guide wheels, and a second rear magnet that corresponds to the first rear magnet is inserted in the rear portion of the base; and in the state where the second part is actuated by the pushing board forward to be closed together with the first part, the first front magnet and the second front magnet attract together with each other, while in the state where the second part is actuated by the pushing board backward until the first part and the second part are completely opened, the first rear magnet and the second rear magnet attract together with each other. When the pushing board moves back and forth to two limit states, warning tone is generated by the attraction of the front and rear magnets, reminding us that the pushing board has been moved in place, which may also enhance touch feeling while moving the pushing board.

The above-mentioned pushing board can cover said capsule inlet when moving forward to the state where the first part and the second part are closed, while the pushing board opens said capsule inlet when moving backward to the state where the first part and the second part are completely opened. When the coffee machine is not in use, the pushing board covers the capsule inlet, which prevents dusts or foreign objects from entering into the interior of the coffee machine and contaminating or damaging internal parts of the coffee machine, so the coffee machine is more secure and hygienic in use.

Further improvement lies in that: the above-mentioned base comprises a frame and a housing; the frame comprises a front retaining plate, a rear retaining plate and two guide posts supported between the front retaining plate and the rear retaining plate and arranged on the left and the right side parallelly at a distance to each other; wherein the guide posts are movably guided through the housing on the left and the right side so that the housing and the frame can slide relative to each other back and forth; there is a support spring sheathed on the both guide posts respectively, and the support springs are supported between the front retaining plate and the front end face of the housing; the capsule inlet is disposed in the housing, the first part is fixed to the front retaining plate, the second part is sheathed on the corresponding guide posts with its left and right sides and can slide back and forth, and the pushing board is disposed on the upper end face of the housing; a retaining seat having a cavity is fixed to the above-mentioned rear retaining plate, a piston which can slide back and forth is disposed in the cavity of the retaining seat, a seal ring is provided between an outer peripheral wall of the piston and an inner peripheral wall of the cavity, a water inlet chamber is formed between the rear end of the piston and the cavity, and the water inlet chamber is in communication with environment through a cold water channel; and the rear end of the second transmission rod is directly or indirectly pivotally connected to the piston.

Due to the aforesaid structure of the base, the locking force between the first part and the second part is realized in water hydraulic driving manner; firstly, the second part is driven to be closed together with the first part under the push of the pushing board, then cold water under high pressure enters into the water inlet chamber from the cold water channel, the piston is moved forward relative to the retaining seat; because the retaining seat is fixed to the frame and the position of the housing relative to the casing body of the coffee machine is fixed, the frame can move as a whole backward relative to the housing against the support force of the support springs, the first part also moves backward relative to the housing, and the first part and the second part are gradually clamped against each other under the water pressure to form a closed extraction chamber; since the locking of the first part and the second part is provided not by the support force formed by a first and a second linkages, that is, it is enough that the sliding of the pushing board drives the second part to move near or to get into contact with the first part only by two linkages, during back and forth sliding the pushing board does not need to overcome additional stronger locking force brought about by linkages, therefore the present mechanism is effort-saving in operation during driving the parts to move; after the extraction is finished, the water pressure is released, the frame moves forward relative to the housing under the action of the springs, the locking force between the first part and the second part is removed, and the pushing board can be easily pulled to separate the first part and the second part from each other.

The above-mentioned cold water channel is disposed in the piston. Of course, it may also be disposed in the retaining seat.

There is a mounting block provided in the rear portion inside the above-mentioned housing, wherein the mounting block is sheathed on the guide posts with its left and right sides, the rear end face of the mounting block is in contact with the outer end face of the piston, and the rear end of the second transmission rod is pivotally connected to the mounting block by means of pivot portions on both sides of the second transmission rod. This structure simplifies the structure of the piston and is ease to assemble; of course, it is also possible to pivotally connect the rear end of the second transmission rod directly to the outer end face of the piston.

The number of the above-mentioned first transmission rods is two, wherein the front ends of the first transmission rods are pivotally connected to the back of the second part by means of first pivot journals, and the rear ends of the first transmission rods are sheathed on the transmission shaft; that the front end of the second transmission rod has two forwardly extending arm portions, and the front ends of the both arm portions are sheathed on the transmission shaft; the lower end of the driving rod is located between the both arm portions, the both first transmission rods are located outside the both arm portions respectively, and there is a jump ring provided on the left and the right end of the transmission shaft respectively so as to axially restrain the first transmission rods, the second transmission rod and the driving rod. The second part can be pushed forward more smoothly by providing two first transmission rods, and because the second transmission rod has two arms and the driving rod is located in the middle exactly, the driving rod can smoothly actuate the first transmission rods and the second transmission rod to move.

The rear portion of the above-mentioned second part has an inner recess, the front ends of the first transmission rods are pivotally connected inside the inner recess by means of the first pivot journals, in the state where the second part is actuated by the pushing board forward to be closed together with the first part, the lower end faces of the first transmission rods get into contact with the bottom surface of the inner recess, preventing the first transmission rods from further deflecting downward, with the axes of the first transmission rods and the second transmission rod including an obtuse angle, forming a self-locking angle; while the frame moves backward relative to the housing, the pivotable connection end between the first transmission rods and the second transmission rod with respect to each other will not warp upwards under the action of external force, ensuring that the first part and the second part can be pressed together.

Compared to the prior art, an advantage of the present invention lies in that: the operation of the present driving structure is based on the action of the back and forth lateral sliding of the pushing board, the pushing board is connected with the second part and the base by a specially designed linkage structure, to actuate the second part to slide back and forth relative to the base; because the movement of the pushing board is lateral sliding, unlike the horizontal movement of the second part realized by means of flipping and pulling the handle up and down to drive parts in the traditional coffee machines, the pushing board may not become warped upwards during the operating process, and does not additionally occupy the space height, and it is effort-saving during operation, therefore, the coffee machine adopting such a driving structure can be used normally even if the coffee machine is placed in a cell of which the height space is reduced, and has better adaptability of use.

### DESCRIPTION OF THE DRAWINGS

FIG. 1 illustrates a perspective schematic view of a embodiment according to the present invention (in an opened state of a first part and a second part);
FIG. 2 illustrates a cross-sectional view of the embodiment according to the present invention (in the opened state of the first part and the second part);
FIG. 3 illustrates a perspective schematic view of the embodiment according to the present invention (wherein the second part is moved to an intermediate state);
FIG. 4 illustrates a cross-sectional view of the embodiment according to the present invention (wherein the second part is moved to the intermediate state);
FIG. 5 illustrates a perspective schematic view of the embodiment according to the present invention (in a closed state of the first part and the second part);
FIG. 6 illustrates a cross-sectional view of the embodiment according to the present invention (in the closed state of the first part and the second part);
FIG. 7 illustrates a perspective schematic view of the embodiment according to the present invention after removal of a pushing board;
FIG. 8 illustrates a perspective schematic view of the embodiment according to the present invention after removal of the pushing board, a housing and a carriage for guide wheels; and
FIG. 9 illustrates a perspective schematic view of a second transmission rod in the embodiment according to the present invention.

### MODE FOR CARRYING OUT THE INVENTION

In the following context, the present invention will be described in further detail in light of embodiments in the accompanying drawings.

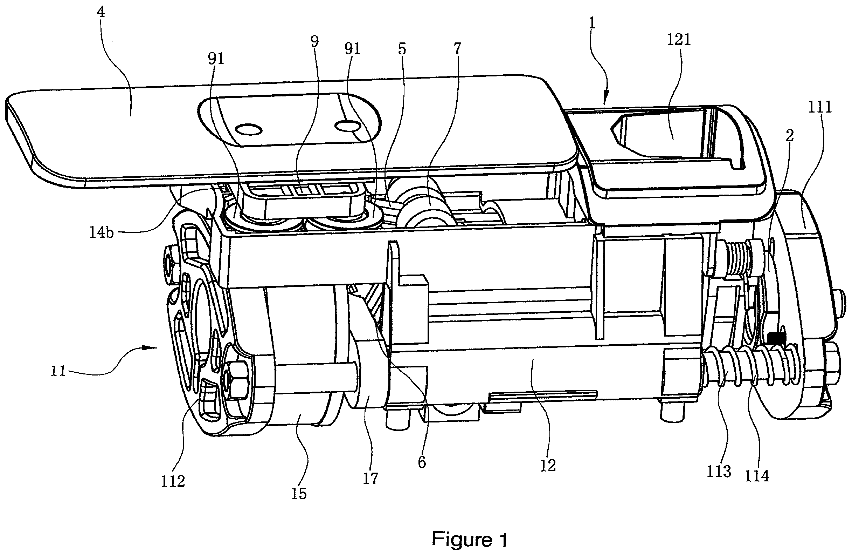

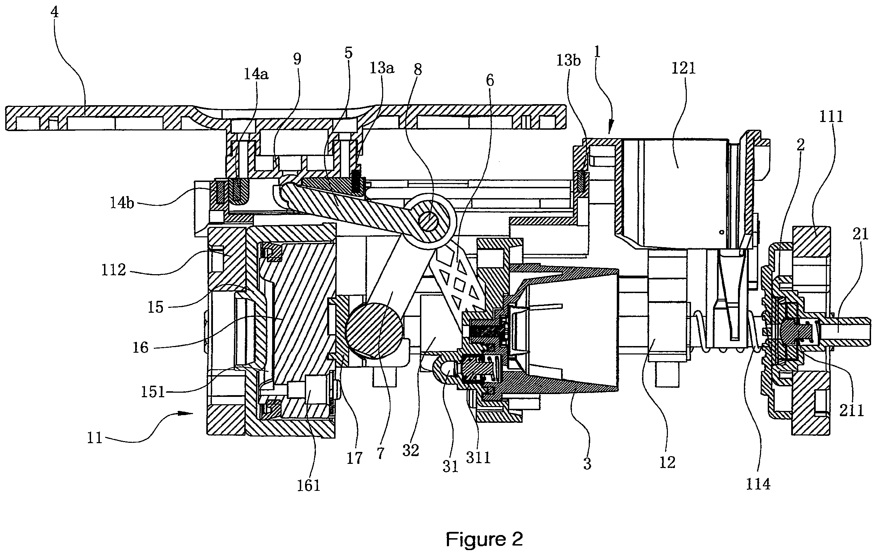

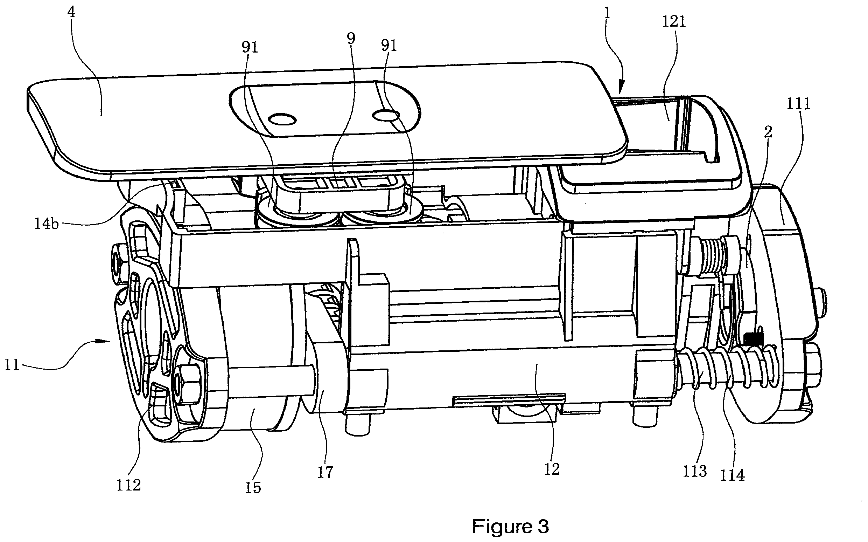

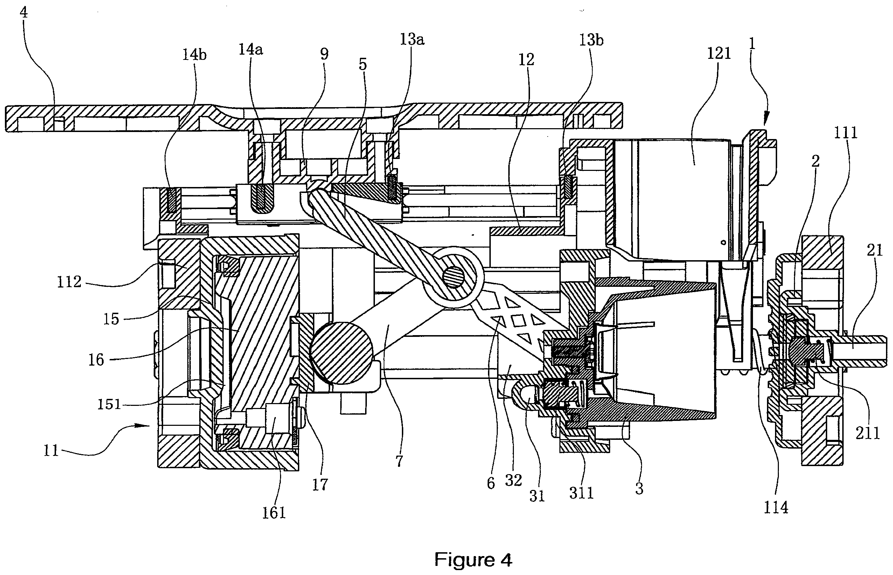

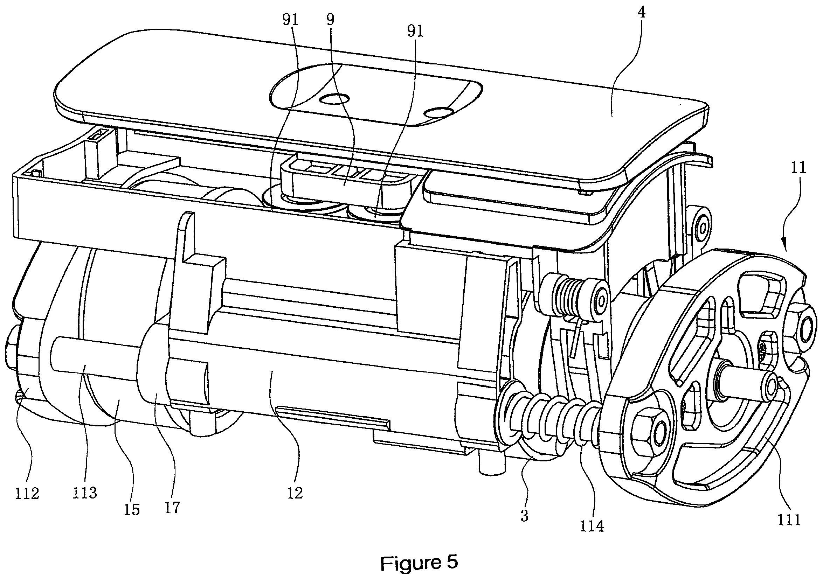

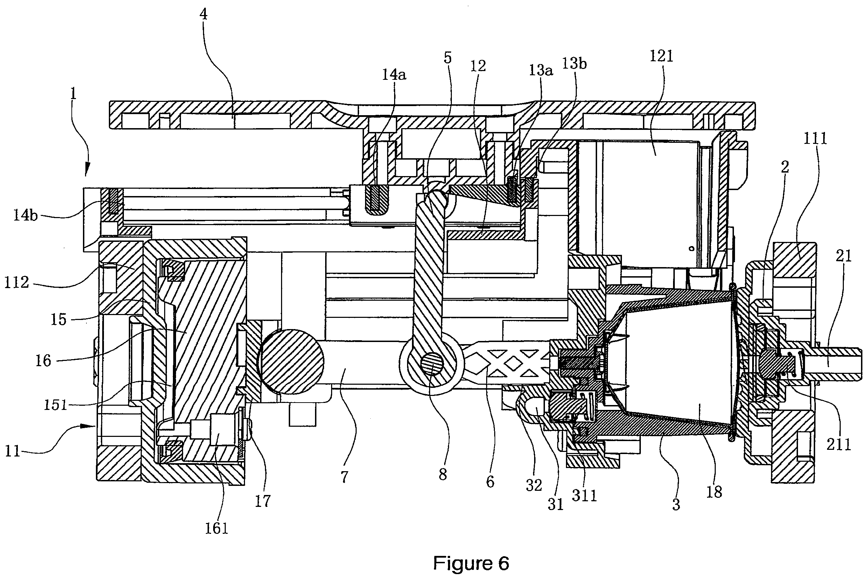

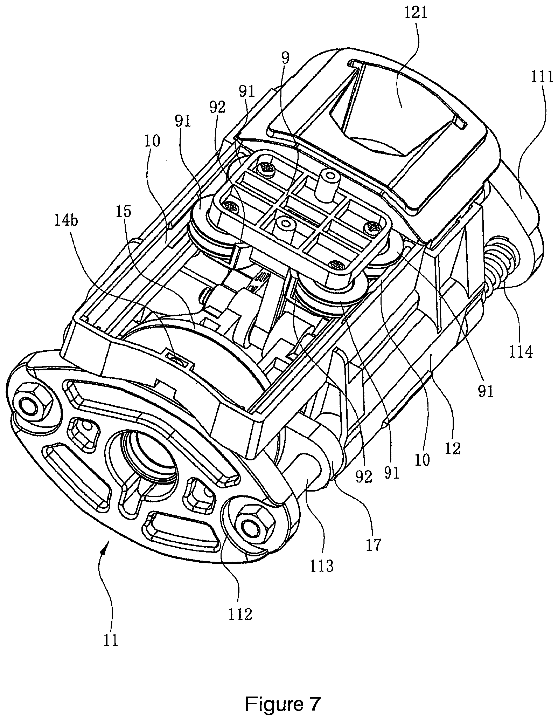

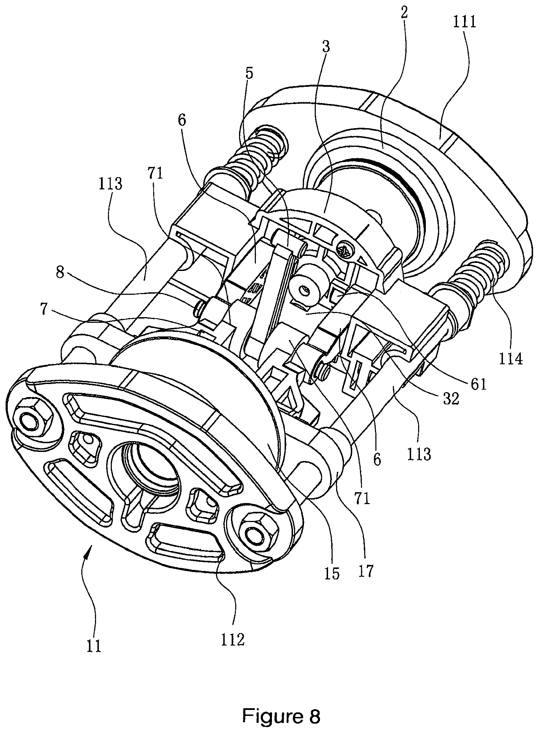

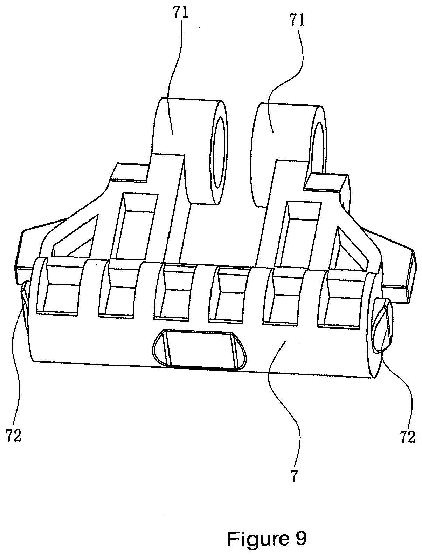

As shown in Figs. 1 to 9, it concerns a preferred embodiment of a part driving structure of a coffee machine according to the present invention.

The part driving structure of the coffee machine includes a base 1, a first part 2 provided with a water outlet channel 21 and a second part 3 provided with a water inlet channel 31 for feeding hot water, wherein in the water outlet channel 21 there is a first one-way valve assembly 211 provided and in the water inlet channel 31 there is a second one-way valve assembly 311 provided.

The base in the present embodiment includes two portions: a frame 11 and a housing 12; the frame 11 includes a front retaining plate 111, a rear retaining plate 112 and two guide posts 113 supported between the front retaining plate 111 and the rear retaining plate 112 and arranged on the left and the right side parallelly at a distance to each other; the housing 12 is a hollow, generally rectangular plastic housing, in the front upper portion of the housing 12 there is a capsule inlet 121 provided for feeding capsules 18, and the guide posts 113 are movably guided through the housing 12 on the left and the right side so that the housing 12 and the frame 11 can slide relative to each other back and forth; there is a support spring 114 provided on each of the both guide posts 113 respectively, and the support springs 114 are supported between the front retaining plate 111 and the front end face of the housing 12; a retaining seat 15 having a cavity is fixed to the rear retaining plate 112, a piston 16 which can slide back and forth is disposed in the cavity of the retaining seat 15, a seal ring 17 is provided between an outer peripheral wall of the piston 16 and an inner peripheral wall of said cavity, a water inlet chamber 151 is formed between the rear end of the piston 16 and the cavity, the water inlet chamber 151 is in communication with environment through a cold water channel 161, and the cold water channel 161 is provided in the piston 16 in the present embodiment.

The first part 2 is fixed to the front retaining plate 111, the second part 3 is sheathed on the corresponding guide posts 113 on its left and the right side so as to be slidable back and forth, a receiving chamber for receiving capsules 18 is provided in the second part 3, and the second part 3 is located within the housing 12; a pushing board 4 that can slide back and forth relative to the base 1 is provided on the upper end face of the housing 12, the pushing board 4 is a rectangular plate; the pushing board 4 can cover the capsule inlet 121 when moving forward to the state where the first part 2 and the first part 3 are closed, while the pushing board 4 opens the capsule inlet 121 when moving backward to the state where the first part 2 and the second part 3 are completely opened.

A vertically disposed driving rod 5 is pivotally connected to the bottom surface of the pushing board 4, the upper end of the driving rod 5 is pivotally connected to a carriage 9 for guide wheels by means of its own pivot journal, first transmission rods 6 are pivotally connected to the rear end of the second part 3, a second transmission rod 7 is pivotally connected to the rear portion of the base 1, the rear end of the second transmission rod 7 is directly or indirectly pivotally connected to the piston 16, there is a mounting block 17 provided in the rear portion inside the housing 12, the mounting block 17 is sheathed on the guide posts 113 on its left and right sides, the rear end face of the mounting block 17 is in contact with the outer end face of the piston 16, the rear end of the second transmission rod 7 is pivotally connected to the mounting block 17 by means of pivot portions 71 on its both sides. The lower end of the driving rod 5, the rear ends of the first transmission rods 6 and the front end of the second transmission rod 7 are movably sheathed on one and the same transmission shaft 8.

There are two first transmission rods 6 provided, wherein the front ends of the first transmission rods 6 are pivotally connected to the back of the second part 3 by means of first pivot journals 61, and the rear ends of the first transmission rods 6 are sheathed on the transmission shaft 8; the front end of the second transmission rod 7 has two forwardly extending arm portions 72, and the front ends of the both arm portions 72 are sheathed on the transmission shaft 8; the lower end of the driving rod 5 is located between the both arm portions 72, the both first transmission rods 6 are located outside the both arm portions 72 respectively, and there is a jump ring provided on the left and the right end of the transmission shaft 8 respectively so as to axially restrain the first transmission rods 6, the second transmission rod 7 and the driving rod 5, wherein the jump rings are not shown in the drawings.

The rear portion of the second part 3 has an inner recess 32, the front ends of the first transmission rods 6 are pivotally connected within the inner recess 32 by means of the first pivot journals 61; in the state where the second part 3 is actuated by the pushing board 4 forward to be closed together with the first part 2, the lower end faces of the first transmission rods 6 get into contact with the bottom surface of the inner recess 32, preventing the first transmission rods 6 from further deflecting downward, with the axes of the first transmission rods 6 and the second transmission rod 7 including an obtuse angle α.

A carriage 9 for guide wheels is fixed to the lower end of the pushing board 7, the carriage 9 for guide wheels is fixed underneath the pushing board 4 by means of screws, and there are two mounting places 92 for the guide wheels provided respectively on the left and the right side of the carriage 9 for the guide wheels, wherein each of the guide wheels 91 is mounted in one mounting place 9 for guide wheel respectively, there is a guide shaft 10 provided in the inner upper portion of the base 1 respectively on the left and the right side, and wheel grooves on the guide wheels 91 on either side are in contact with the guide shaft 10 on the corresponding side. A first front magnet 13a is inserted in the front end of the carriage 9 for guide wheels, and a second front magnet 13b that corresponds to the first front magnet 13a is inserted in the middle portion of the housing 12; a first rear magnet 14a is inserted in the rear end of the carriage 9 for guide wheels, and a second rear magnet 14b that corresponds to the first rear magnet 14a is inserted in the rear portion of the housing 12; in the state where the second part 3 is actuated by the pushing board 4 forward to be closed together with the first part 2, the first front magnet 13a and the second front magnet 13b attract together with each other, while in the state where the second part 3 is actuated by the pushing board 4 backward until the first part 2 and the second part 3 are completely opened, the first rear magnet 14a and the second rear magnet 14b attract together with each other.

The operation principle and process of the present part driving structure of a coffee machine are as follows:
Capsule feeding process: the capsule 18 is feed from the capsule inlet 121, the pushing board 7 is pushed forward, and the upper end of the driving rod 5 underneath the pushing board 7 deflects forward generally about the transmission shaft 8 as a fulcrum; since the upper end of the driving rod 5 is restrained by the pushing board 7, during deflection of the driving rod 5, the transmission shaft 8 will be actuated to move down relative to the pushing board, so that the transmission shaft 8 will actuate the rear ends of the first transmission rods 6 and the front end of the second transmission rod 7 to move downward, and the first transmission rods 6 and the second transmission rod 7 gradually expand outward and remain horizontal, while because the rear end of the second transmission rod 7 is restrained by the mounting block 18, the second part 3 will be pushed by the second transmission rod 7 forward relative to the first part 2, at the same time the capsule 18 gradually enters into the recess 32 of the second part 3. In the state where the second part 3 is actuated by the forth movement of the pushing board 4 forward to be closed together with the first part 2, the first front magnet 13a and the second front magnet 13b attract together with each other, the pushing board 4 covers the capsule inlet 121, and the lower end faces of the first transmission rods 6 get into contact with the bottom surface of the inner recess 32, preventing the first transmission rods 6 from further deflecting downward, with the axes of the first transmission rods 6 and the second transmission rod 7 including an obtuse angle α.

Clamping process of the first part 2 and the second part 3: the cold water channel 16 is supplied with cold water under high pressure, the cold water under high pressure is pressed into the water inlet chamber 151 and drives the piston 16 to move forward relative to the retaining seat; because when the entire part driving structure is mounted, the retaining seat 15 is fixed to the rear retaining plate 112 of the frame, and the position of the housing 12 relative to the casing body of the coffee machine is fixed, the frame 11 will move as a whole backward relative to the housing 12 against the support force of the support springs 114, the first part 2 also moves backward relative to the housing 12, the first part 2 and the second part 3 are clamped against each other gradually under the water pressure to form a closed extraction chamber, and then coffee extraction process may take place, which process is similar to that of the prior coffee machines.

After the extraction is finished, the cold water channel 16 is released, the cold water under high pressure in the water inlet chamber 151 is discharged, the entire parts move forward relative to the housing under the action of the support force of the support springs 114, the locking force of the first part 2 and the second part 3 is removed, and then the pushing board 4 is pulled backward, the second part 3 is actuated by the pushing board 4 to move backward relative to the first part 2 under the action of the driving rod 5, the first linkages 6 and the second linkage 7; in the state where the second part 3 is actuated by the pushing board 4 backward until the first part 2 and the second part 3 are completely opened, the first rear magnet 14a and the second rear magnet 14b attract together with each other, the coffee capsule 18 is separated, the pushing board 4 opens the capsules inlet 121; in order to ensure security and hygiene of the coffee machine, when not in use, the pushing board shall be moved forward, and the pushing board 4 covers the capsule inlet 121.

## Claims

1. A part driving structure of a coffee machine, comprising a base (1), a first part (2) provided with a water outlet channel (21) and a second part (3) provided with a water inlet channel (31);
wherein the first part (2) is fixed to the front end of the base (1), the second part (3) is restrained within the base (1) and can slide back and forth, a pushing board (4) is provided on the top surface of the base (1), and there is a capsule inlet (121) provided in the upper portion of the base (1);
**characterized in that**
the pushing board (4) can slide back and forth relative to the base (1) a vertically disposed driving rod (5) is pivotally connected to the bottom surface of the pushing board (4), a first transmission rod (6) is pivotally connected to the rear end of the second part (3), and a second transmission rod (7) is pivotally connected to the rear portion of the base (1), wherein the lower end of the driving rod (5), the rear end of the first transmission rod (6) and the front end of the second transmission rod (7) are movably sheathed on one and the same transmission shaft (8).

2. The part driving structure of a coffee machine according to claim 1,
**characterized in that** a carriage (9) for guide wheels is fixed to the lower end of the pushing board (7), the guide wheels (91) are mounted on the carriage (9) for guide wheels, and there is a guide shaft (10) provided in the inner upper portion of the base (1) respectively on the left and the right side, wherein wheel grooves on the guide wheels (91) are in contact with the guide shafts (10), and the upper end of the driving rod (5) is pivotally connected to the carriage (9) for guide wheels by means of its own pivot journal.

3. The part driving structure of a coffee machine according to claim 2,
**characterized in that** the carriage (9) for guide wheels is fixed underneath the pushing board (4) by means of screws, and there are two mounting places (92) for guide wheels provided respectively on the left and the right side of the carriage (9) for guide wheels, wherein each of the guide wheels (91) is mounted in one mounting place (92) for guide wheel respectively, and the wheel grooves on the guide wheels (91) on either side are in contact with the guide shaft (10) on the corresponding side.

4. The part driving structure of a coffee machine according to claim 3,
**characterized in**
**that** a first front magnet (13a) is inserted in the front end of the carriage (9) for guide wheels, and a second front magnet (13b) that corresponds to the first front magnet (13a) is inserted in the front portion of the base (1);
**that** a first rear magnet (14a) is inserted in the rear end of the carriage (9) for guide wheels, and a second rear magnet (14b) that corresponds to the first rear magnet (14a) is inserted in the rear portion of the base (1); and
**that** in the state where the second part (3) is actuated by the pushing board (4) forward to be closed together with the first part (2), the first front magnet (13a) and the second front magnet (13b) attract together with each other, while in the state where the second part (3) is actuated by the pushing board (4) backward until the first part (2) and the second part (3) are completely opened, the first rear magnet (14a) and the second rear magnet (14b) attract together with each other.

5. The part driving structure of a coffee machine according to claim 1,
**characterized in that**: the pushing board (4) can cover the capsule inlet (121) when moving forward to the state where the first part (2) and the second part (3) are closed, while the pushing board (4) opens the capsule inlet (121) when moving backward to the state where the first part (2) and the second part (3) are completely opened.

6. The part driving structure of a coffee machine according to any one of claims 1 to 5, **characterized in**
**that** the base comprises a frame (11) and a housing (12);
**that** the frame (11) comprises a front retaining plate (111), a rear retaining plate (112) and two guide posts (113) supported between the front retaining plate (111) and the rear retaining plate (112) and arranged on the left and the right side parallelly at a distance to each other, wherein the guide posts (113) are movably guided through the housing (12) on the left and the right side so that the housing (12) and the frame (11) can slide relative to each other back and forth; there is a support spring (114) sheathed on the both guide posts (113) respectively, and the support springs (114) are supported between the front retaining plate (111) and the front end face of the housing (12);
**that** the capsule inlet (121) is disposed in the housing (12), the first part (2) is fixed to the front retaining plate (111), the second part (3) is sheathed on the corresponding guide posts (113) with its left and right sides and can slide back and forth, and the pushing board (4) is disposed on the upper end face of the housing (12);
**that** a retaining seat (15) having a cavity is fixed to the aforesaid rear retaining plate (112), a piston (16) that can slide back and forth is disposed in the cavity of the retaining seat (15), a seal ring (17) is provided between an outer peripheral wall of the piston (16) and an inner peripheral wall of the cavity, a water inlet chamber (151) is formed between the rear end of the piston (16) and the cavity, and the water inlet chamber (151) is in communication with environment through a cold water channel (161); and
**that** the rear end of the second transmission rod (7) is directly or indirectly pivotally connected to the piston (16).

7. The part driving structure of a coffee machine according to claim 6,
**characterized in that** the cold water channel (161) is disposed in the piston (16).

8. The part driving structure of a coffee machine according to claim 6,
**characterized in that** there is a mounting block (17) provided in the rear portion inside the housing (12), wherein the mounting block (17) is sheathed on the guide posts (113) with its left and right sides, the rear end face of the mounting block (17) is in contact with the outer end face of the piston (16), and the rear end of the second transmission rod (7) is pivotally connected to the mounting block (17) by means of pivot portions (71) on both sides of the second transmission rod.

9. The part driving structure of a coffee machine according to claim 8,
**characterized in**
**that** there are two first transmission rods (6) provided, wherein the front ends of the first transmission rods (6) are pivotally connected to the back of the second part (3) by means of first pivot journals (61), and the rear ends of the first transmission rods (6) are sheathed on the transmission shaft (8);
**that** the front end of the second transmission rod (7) has two forwardly extending arm portions (72), and the front ends of the both arm portions (72) are sheathed on the transmission shaft (8); and
**that** the lower end of the driving rod (5) is located between the both arm portions (72), the both first transmission rods (6) are located outside the both arm portions (72) respectively, there is a jump ring provided on the left and the right end of the transmission shaft (8) respectively so as to axially restrain the first transmission rods (6), the second transmission rod (7) and the driving rod (5).

10. The part driving structure of a coffee machine according to claim 9,
**characterized in that** the rear portion of the second part (3) has an inner recess (32), the front ends of the first transmission rods (6) are pivotally connected inside the inner recess (32) by means of the first pivot journals (61), in the state where the second part (3) is actuated by the pushing board (4) forward to be closed together with the first part (2), the lower end faces of the first transmission rods (6) get into contact with the bottom surface of the inner recess (32), preventing the first transmission rods (6) from further deflecting downward, with the axes of the first transmission rods (6) and the second transmission rod (7) including an obtuse angle (α).

## Patentansprüche

1. Teilantriebsstruktur einer Kaffeemaschine, umfassend eine Basis (1), ein erstes Teil (2), bereitgestellt mit einem Wasserauslasskanal (21), und ein zweites Teil (3), bereitgestellt mit einem Wassereinlasskanal (31); wobei das erste Teil (2) an dem vorderen Ende der Basis (1) fixiert ist, das zweite Teil (3) eingeschränkt innerhalb der Basis (1) ist und vorwärts und rückwärts gleiten kann, eine Schiebeplatte (4) vorgesehen ist auf der oberen Oberfläche der Basis (1), und ein Kapseleinlass (121) sich im oberen Abschnittes der Basis (1) befindet; **dadurch gekennzeichnet, dass** die Schiebeplatte (4) vorwärts und rückwärts gleiten kann relativ zur Basis (1), eine vertikal angeordnete Antriebsstange (5) schwenkbar mit der unteren Oberfläche der Schiebeplatte (4) verbunden ist, eine erste Übertragungsstange (6) schwenkbar mit dem hinteren Ende des zweiten Teils (3) verbunden ist, und eine zweite Übertragungsstange (7) schwenkbar mit dem hinteren Teil der Basis (1) verbunden ist, wobei das untere Ende der Antriebsstange (5), das hintere Ende der ersten Übertragungsstange (6) und das vordere Ende der zweiten Übertragungsstange (7) beweglich auf ein und derselben Übertragungswelle (8) angeordnet sind.

2. Die Teilantriebsstruktur einer Kaffeemaschine nach Anspruch 1, **dadurch gekennzeichnet, dass** ein Schlitten (9) für Führungsräder an dem unteren Ende der Schiebeplatte (7) befestigt ist, die Führungsräder (91) an dem Schlitten (9) für Führungsräder montiert sind, und sich ein Führungswelle (10) im oberen Abschnitt der Basis (1) jeweils auf der linken und rechten Seite befindet, wobei Radrillen auf den Führungsrädern (91) im Kontakt mit dem Führungswelle (10) sind, und das obere Ende der Antriebsstange (5) mittels seines eigenen Stützzapfens schwenkbar mit dem Schlitten (9) für Führungsräder verbunden ist.

3. Die Teilantriebsstruktur einer Kaffeemaschine nach Anspruch 2, **dadurch gekennzeichnet, dass** der Schlitten (9) für Führungsräder unterhalb der Schiebeplatte (4) mittels Schrauben fixiert ist und sich zwei Anbaustellen (92) für Führungsräder jeweils auf der linken und der rechten Seite des Schlittens (9) für Führungsräder befinden, wobei jedes der Führungsräder (91) an einer Anbaustelle (92) entsprechend für Führungsräder montiert ist und die Radrillen auf den Führungsrädern (91) auf beiden Seiten im Kontakt mit dem Führungswelle (10) auf der zugehörigen Seite sind.

4. Die Teilantriebsstruktur einer Kaffeemaschine nach Anspruch 3, **dadurch gekennzeichnet, dass** ein erster vorderer Magnet (13a) in das vordere Ende des Schlittens (9) für Führungsräder eingesetzt ist, und ein zweiter vorderer Magnet (13b), welcher dem ersten vorderen Magneten (13a) zugeordnet ist, im vorderen Abschnitt der Basis (1) eingesetzt ist; dass ein erster hinterer Magnet (14a) in dem hinteren Ende des Schlittens (9) für Führungsräder, und ein zweiter hinterer Magnet (14b), welcher dem ersten hinteren Magnet (14a) zugeordnet ist, im hinteren Abschnitt der Basis (1) eingesetzt ist; und dass in dem Zustand, in dem das zweite Teil (3) durch die Schiebeplatte (4) vorwärts bewegt wird, sodass dieses sich mit dem ersten Teil (2) zusammenschließt, der erste vordere Magnet (13a) und der zweite vordere Magnet (13b) einander anziehen, während in dem Zustand, in dem das zweite Teil (3) durch die Schiebeplatte (4) rückwärts bewegt wird bis das erste Teil (2) und das zweite Teil (3) komplett geöffnet sind, der erste hintere Magnet (14a) und der zweite hintere Magnet (14b) einander anziehen.

5. Die Teilantriebsstruktur einer Kaffeemaschine nach Anspruch 1, **dadurch gekennzeichnet, dass** die Schiebeplatte (4) den Kapseleinlass (121) bedecken kann bei Vorwärtsbewegung in den Zustand, in dem das erste Teil (2) und das zweite Teil (3) geschlossen sind, während die Schiebeplatte (4) den Kapseleinlass (121) öffnet bei Rückwärtsbewegung in den Zustand, in dem der erste Teil (2) und das zweite Teil (3) komplett geöffnet sind.

6. Die Teilantriebsstruktur einer Kaffeemaschine nach einem der Ansprüche 1 bis 5, **dadurch gekennzeichnet, dass** die Basis ein Gestell (11) und ein Gehäuse (12) umfasst; dass das Gestell (11) eine vordere Halteplatte (111), eine hintere Halteplatte (112) und zwei Führungspfosten (113), befestigt zwischen der vorderen Halteplatte (111) und der hinteren Halteplatte (112) und auf der linken und rechten Seite parallel in einer Distanz zueinander angeordnet, umfasst, wobei die Führungspfosten (113) beweglich durch das Gehäuse (12) auf der linken und rechten Seite geführt werden, sodass das Gehäuse (12) und das Gestell (11) relativ zueinander vorwärts und rückwärts gleiten können; eine Stützfeder (114) befindet sich jeweils auf beiden Führungspfosten (113), und die Stützfedern (114) sind zwischen der vorderen Halteplatte (111) und der vorderen Stirnseite des Gehäuses (12) befestigt; dass der Kapseleinlass (121) sich in dem Gehäuse (12) befindet, das erste Teil (2) an der vorderen Halteplatte (111) fixiert ist, das zweite Teil (3) durch die zugehörigen Führungspfosten (113) auf seiner linken und rechten Seite begrenzt ist und vorwärts und rückwärts gleiten kann, und sich die Schiebeplatte (4) auf der oberen Stirnseite des Gehäuses (12) befindet; dass eine Halteauflage (15) mit einem Hohlraum an der genannten hinteren Halteplatte (112) fixiert ist, ein Kolben (16), der vorwärts und rückwärts gleiten kann, in dem Hohlraum der Halteauflage (15) eingesetzt ist, sich ein Dichtring (17) zwischen einer äußeren peripheren Wand des Kolbens (16) und einer inneren peripheren Wand des Hohlraumes befindet, eine Wassereinlasskammer (151) zwischen dem hinteren Ende des Kolbens (16) und dem Hohlraum gebildet ist, und die Wassereinlasskammer (151) in Kontakt mit der Umgebung durch einen Kaltwasserkanal (161) ist; und dass das hintere Ende der zweiten Übertragungsstange (7) direkt oder indirekt schwenkbar mit dem Kolben (16) verbunden ist.

7. Die Teilantriebsstruktur einer Kaffeemaschine nach Anspruch 6, **dadurch gekennzeichnet, dass** der Kaltwasserkanal (161) sich in dem Kolben (16) befindet.

8. Die Teilantriebsstruktur einer Kaffeemaschine nach Anspruch 6, **dadurch gekennzeichnet, dass** ein Anbaublock (17) im hinteren Abschnitt innerhalb des Gehäuses (12) bereitgestellt ist, wobei der Anbaublock (17) auf dem Führungspfosten (113) mit seinen linken und rechten Seiten angeordnet ist, die hintere Stirnseite des Anbaublocks (17) in Kontakt ist mit der äußeren Stirnseite des Kolbens (16), und das hintere Ende der zweiten Übertragungsstange (7) schwenkbar mit dem Anbaublock (17) verbunden ist mittels der Schwenkabschnitte (71) auf beiden Seiten der zweiten Übertragungsstange (7).

9. Die Teilantriebsstruktur einer Kaffeemaschine nach Anspruch 8, **dadurch gekennzeichnet, dass** zwei erste Übertragungsstangen (6) bereitgestellt sind, wobei die vorderen Enden der ersten Übertragungsstangen (6) schwenkbar mit der Rückseite des zweiten Teils (3) verbunden sind mittels der ersten Stützzapfen (61), und die hinteren Enden der ersten Übertragungsstangen (6) auf der Übertragungswelle (8) angeordnet sind; dass das vordere Ende der zweiten Übertragungsstange (7) zwei nach vorne verlängernde Halterungsabschnitte (72) aufweist, und die vorderen Enden beider Halterungsabschnitte (72) auf der Übertragungswelle (8) angeordnet sind; und dass das untere Ende der Antriebsstange (5) sich zwischen beiden Halterungsabschnitten (72) befindet, beide ersten Übertragungsstangen (6) jeweils außerhalb der Halterungsabschnitte (72) gelegen sind, ein Bindering jeweils auf dem linken und rechten Ende der Übertragungswelle (8) vorliegt, um axial die ersten Übertragungsstangen (6), die zweite Übertragungsstange (7) und die Antriebsstange (5) einzuschränken.

10. Die Teilantriebsstruktur einer Kaffeemaschine nach Anspruch 9, **dadurch gekennzeichnet, dass** der hintere Abschnitt des zweiten Teils (3) eine innere Vertiefung (32) aufweist, die vorderen Enden der ersten Übertragungsstangen (6) schwenkbar in der inneren Vertiefung (32) mittels der ersten Stützzapfen (61) verbunden sind, in dem Zustand, in dem das zweite Teil (3) durch die Schiebeplatte (4) vorwärts bewegt wird, sodass es sich mit dem ersten Teil (2) zusammenschließt, die unteren Stirnseiten der ersten Übertragungsstangen (6) in Kontakt mit der unteren Oberfläche der inneren Vertiefung (32) kommen, dabei eine weitere Durchbiegung nach unten der ersten Übertragungsstangen (6) verhindern, mit den Achsen der ersten Übertragungsstangen (6) und der zweiten Übertragungsstange (7) einen stumpfen Winkel (α) einschließend.

## Revendications

1. Structure d'entraînement de pièces d'une machine à café, comprenant une base (1), une première pièce (2) dotée d'un canal de sortie d'eau (21) et une seconde pièce (3) dotée d'un canal d'entrée d'eau (31) ;
dans laquelle la première pièce (2) est fixée à l'extrémité avant de la base (1), la seconde pièce (3) est retenue dans la base (1) et peut coulisser vers l'avant et l'arrière, un panneau à pression (4) est prévu sur la surface supérieure de la base (1), et une entrée de capsule (121) est prévue dans la portion supérieure de la base (1) ;
**caractérisée en ce que**
le panneau à pression (4) peut coulisser vers l'avant et l'arrière par rapport à la base (1) une tige d'entraînement disposée verticalement (5) est raccordée de manière pivotante à la surface inférieure du panneau à pression (4), une première tige de transmission (6) est raccordée de manière pivotante à l'extrémité arrière de la seconde pièce (3), et une seconde tige de transmission (7) est raccordée de manière pivotante à la portion arrière de la base (1), dans laquelle l'extrémité inférieure de la tige d'entraînement (5), l'extrémité arrière de la première tige de transmission (6) et l'extrémité avant de la seconde tige de transmission (7) sont gainées de manière mobile sur un même arbre de transmission (8).

2. Structure d'entraînement de pièces d'une machine à café selon la revendication 1,
**caractérisée en ce qu'**un chariot (9) pour roues de guidage est fixé à l'extrémité inférieure du panneau à pression (7), les roues de guidage (91) sont montées sur le chariot (9) pour roues de guidage, et un arbre de guidage (10) est prévu dans la portion supérieure intérieure de la base(1) respectivement sur le côté gauche et le côté droit, dans laquelle des rainures de roue sur les roues de guidage (91) sont en contact avec les arbres de guidage (10), et l'extrémité supérieure de la tige d'entraînement (5) est raccordée de manière pivotante au chariot (9) pour roues de guidage au moyen de son propre tenon de pivotement.

3. Structure d'entraînement de pièces d'une machine à café selon la revendication 2,
**caractérisée en ce que** le chariot (9) pour roues de guidage est fixé sous le panneau à pression (4) au moyen de vis, et deux emplacements de montage (92) pour roues de guidage sont prévus respectivement sur le côté gauche et le côté droit du chariot (9) pour roues de guidage, dans laquelle chacune des roues de guidage (91) est montée dans un emplacement de montage (92) pour roue de guidage respectivement, et les rainures de roue sur les roues de guidage (91) sur l'un ou l'autre côté sont en contact avec l'arbre de guidage (10) sur le côté correspondant.

4. Structure d'entraînement de pièces d'une machine à café selon la revendication 3,
**caractérisée en ce**
**qu'**un premier aimant avant (13a) est inséré dans l'extrémité avant du chariot (9) pour roues de guidage, et un second aimant avant (13b) qui correspond au premier aimant avant. (13a) est inséré dans la portion avant de la base (1) ;
**qu'**un premier aimant arrière (14a) est inséré dans l'extrémité arrière du chariot (9) pour roues de guidage, et un second amant arrière (14b) qui correspond au premier aimant arrière (14a) est inséré dans la portion arrière de la base (1) ; et
**que** dans l'état où la seconde pièce (3) est actionnée par le panneau à pression (4) vers l'avant pour être fermée conjointement avec la première pièce (2), le premier aimant avant (13a) et le second aimant avant (13b) s'attirent conjointement l'un avec l'autre, alors que dans l'état où la seconde pièce (3) est actionnée par le panneau à pression (4) vers l'arrière jusqu'à ce que la première pièce (2) et la seconde pièce (3) soient complètement ouvertes, le premier aimant arrière (14a) et le second aimant arrière (14b) s'attirent conjointement l'un avec l'autre.

5. Structure d'entraînement de pièces d'une machine à café selon la revendication 1,
**caractérisée en ce que** : le panneau à pression (4) peut couvrir l'entrée de capsule (121) lors du déplacement, vers l'avant dans l'état où la première pièce (2) et la seconde pièce (3) sont fermées, alors que le panneau à pression (4) ouvre l'entrée de capsule (121) lors du déplacement vers l'arrière dans l'état où la première pièce (2) et la seconde pièce (3) sont complètement ouvertes.

6. Structure d'entraînement de pièces d'une machine à café selon l'une quelconque des revendications 1 à 5, **caractérisée en ce**
**que** la base comprend un cadre (11) et un boîtier (12) ;
**que** le cadre (11) comprend une plaque de retenue avant (111), une plaque de retenue arrière (112) et deux montants de guidage (113) supportés entre la plaque de retenue avant (111) et la plaque de retenue arrière (112) et agencés sur le côté gauche et le côté droit parallèlement à une distance l'un de l'autre, dans lequel les montants de guidage (113) sont guidés de manière mobile au travers du boîtier (12) sur le côté gauche et le côté droit de sorte que le boîtier (12) et le cadre (11) puissent coulisser l'un par rapport à l'autre vers l'avant et l'arrière; un ressort de support (114) est gainé sur les deux montants de guidage (113) respectivement, et les ressorts de support (114) sont supportés entre la plaque de retenue avant (111) et la face d'extrémité avant du boîtier (12) ;
**que** l'entrée de capsule (121) est disposée dans le boîtier (12), la première pièce (2) est fixée à la plaque de retenue avant (111), la seconde pièce (3) est gainée sur les montants de guidage correspondants (113) avec ses côtés gauche et droit et peut coulisser vers l'avant et l'arrière, et le panneau à pression (4) est disposé sur la face d'extrémité supérieure du boîtier (12) ;
**qu'**un siège de retenue (15) présentant une cavité est fixé sur ladite plaque de retenue arrière (112), un piston (16) qui peut coulisser vers l'avant et l'arrière est disposé dans la cavité du siège de retenue (15), un anneau étanche (17) est prévu entre une paroi périphérique extérieure du piston (16) et une paroi périphérique intérieure de la cavité, une chambre d'entrée d'eau (151) est formée entre l'extrémité arrière du piston (16) et la cavité, et la chambre d'entrée d'eau (151) est en communication avec l'environnement au travers d'un canal d'eau froide (161) ; et
**que** l'extrémité arrière de la seconde tige de transmission (7) est raccordée de manière pivotante directement ou indirectement au piston (16).

7. Structure d'entraînement de pièces d'une machine à café selon la revendication 6,
**caractérisée en ce que** le canal d'eau froide (161) est disposé dans le piston (16).

8. Structure d'entraînement de pièces d'une machine à café selon la revendication 6,
**caractérisée en ce qu'**un bloc de montage (17) est prévu dans la portion arrière dans le boîtier (12), dans laquelle le bloc de montage (17) est gainé sur les montants de guidage (113) avec ses côtés gauche et droit, la face d'extrémité arrière du bloc de montage (17) est en contact avec la face d'extrémité extérieure du piston (16), et l'extrémité arrière de la seconde tige de transmission (7) est raccordée de manière pivotante au bloc de montage (17) au moyen de portions de pivotement (71) sur les deux côtés de la seconde tige de transmission.

9. Structure d'entraînement de pièces d'une machine à café selon la revendication 8, **caractérisée en ce**
**que** deux premières tiges de transmission (6) sont prévues, dans laquelle les extrémités avant des premières tiges de transmission (6) sont raccordées de manière pivotante au dos de la seconde pièce (3) au moyen de premiers tenons de pivotement (61), et les extrémités arrière des premières tiges de transmission (6) sont gainées sur l'arbre de transmission (8) ;
**que** l'extrémité avant de la seconde tige de transmission (7) présente deux portions de bras s'étendant vers l'avant (72), et les extrémités avant des deux portions de bras (72) sont gainées sur l'arbre de transmission (8) ; et
**que** l'extrémité inférieure de la tige d'entraînement (5) est située entre les deux portions de bras (72), les deux premières tiges de transmission (6) sont situées en dehors des deux portions de bras (72) respectivement, une bélière est prévue sur l'extrémité gauche et l'extrémité droite de l'arbre de transmission (8) respectivement de sorte à retenir axialement les premières tiges de transmission (6), la seconde tige de transmission (7) et la tige d'entraînement (5).

10. Structure d'entraînement de pièces d'une machine à café selon la revendication 9,
**caractérisée en ce que** la portion arrière de la seconde pièce (3) présente un évidement intérieur (32), les extrémités avant des premières tiges de transmission (6) sont raccordées de manière pivotante dans l'évidement intérieur (32) au moyen des premiers tenons de pivotement (61), dans l'état où la seconde pièce (3) est actionnée par le panneau à pression (4) vers l'avant pour être fermée conjointement avec la première pièce (2), les faces d'extrémité inférieure des premières tiges de transmission (6) viennent en contact avec la surface inférieure de l'évidement intérieur (32), empêchant les premières tiges de transmission (6) d'être encore déviées vers le bas, les axes des premières tiges de transmission (6) et de la seconde tige de transmission (7) incluant un angle obtus (α).
